# EUROPÄISCHE PATENTSCHRIFT

(11) **EP 0 634 667 B1**
(45) Veröffentlichungstag und Bekanntmachung des Hinweises auf die Patenterteilung: **16.06.1999**
(21) Anmeldenummer: 94110446.5
(22) Anmeldetag: 05.07.1994
(51) Int. Cl.: G01S 13/44, G01S 7/03, H01Q 1/24, H01Q 15/02

(54) **Monopuls-Kleinradar**
Small monopulse radar
Radar monopulse de dimension réduite

(30) Priorität: 13.07.1993 DE 4323387
(43) Veröffentlichungstag der Anmeldung: 18.01.1995
(73) Patentinhaber: Daimler-Benz Aerospace Aktiengesellschaft, 81663 München (DE)
(72) Erfinder: Lindner, Kurt, D-89075 Ulm (DE)
(74) Vertreter: Fröhling, Werner Otto, Dr.

(56) Entgegenhaltungen:
- EP-A- 0 474 393
- DE-A- 3 525 778
- FR-A- 2 575 554
- GB-A- 2 042 300
- US-A- 4 980 925
- PROCEEDINGS OF THE ANTENNAS AND PROPAGATION SOCIETY INTERNATIONAL SYMPOSIUM (APSIS), ANN ARBOR, JUNE 28 - JULY 2, 1993, Bd. 2, 28.Juni 1993, INSTITUTE OF ELECTRICAL AND ELECTRONICS ENGINEERS, Seiten 608-611, XP000419973 LING C C ET AL: "A 94GHZ INTEGRATED MONOPULSE RECEIVER"

## Beschreibung

Die Erfindung betrifft ein Monopuls-Kleinradar gemäß dem Oberbegriff des Patentanspruchs 1.

Kleinradare im Millimeterwellenbereich werden heute im Industriebereich und in der Kraftfahrzeugsensorik immer häufiger eingesetzt. Für eine erfolgreiche Vermarktung müssen solche Geräte preiswert und gut reproduzierbar sein.

Allgemein bekannt ist die Ausbildungsform eines Senders in Form eines Oszillators. Er gibt einen Teil seiner Leistung über Koppler an zwei Mischer ab. Zudem sind der Sender und die Mischer direkt an Primärantennen gekoppelt. Diese Anordnung ist für Dauerstrichanwendung (z. B. FM-CW) geeignet und gewährleistet eine gute Kanaltrennung. Mit Hilfe einer Sekundärantenne werden die abgestrahlten Antennenkeulen so gelegt, daß sie sich überlappen. Mit bekannten Amplituden-Monopulsverfahren kann durch Vergleich der beiden Empfangskanäle die Zielablage bestimmt werden. Solche Anordnungen wurden bereits mit herkömmlicher Hohlleitern aufgebaut, was zu Anordnungen großer Ausdehnung führt.

Der Erfindung liegt nunmehr die Aufgabe zugrunde, ein Monopuls-Kleinradar zu schaffen, welches gegenüber herkömmlichen Radargeräten wesentlich kompakter ausfällt, sowie eine sehr hohe Störstrahlungsfestigkeit aufweist.

Die erfindungsgemäße Lösung der Aufgabe wird durch die kennzeichnenden Merkmale des Patentanspruchs 1 wiedergegeben. Die weiteren Ansprüche enthalten vorteilhafte Ausund Weiterbildungen der Erfindung.

Erfindungsgemäß wird die Aufgabe dadurch gelöst, daß zwei Mischer und ein Oszillator, welche jeweils untereinander sowie mit je einer Antenne verbunden sind, auf einem Substrat ausgebildet sind. Ferner ist auf die Mischer und den Oszillator jeweils ein Hohlleiter aufgesetzt.

Anhand der Zeichnungen wird nachfolgend die Erfindung exemplarisch verdeutlicht, wobei gleiche Bezugszeichen in verschiedenen Figuren gleiche Bezugselemente kennzeichnen.

Es zeigen:
- FIG. 1: eine bevorzugte Ausführungsform des erfindungsgemäßen Monopuls-Kleinradars in der Draufsicht;
- FIG. 2: die bevorzugte Ausführungsform des erfindungsgemäßen Monopuls-Kleinradars im Querschnitt;
- FIG. 3: das Substrat der bevorzugten Ausführungsform des erfindungsgemäßen Monopuls-Kleinradars mit einer Planarschaltung in der Draufsicht;
- FIG. 4: ein Prinzipschaltbild der Planarschaltung gemäß FIG. 3;
- FIG. 5: eine erste Weiterbildung des Monopuls-Kleinradars gemäß FIG. 2 in Seitenansicht;
- FIG. 6: eine zweite Weiterbildung des Monopuls-Kleinradars gemäß FIG. 2 im Querschnitt.

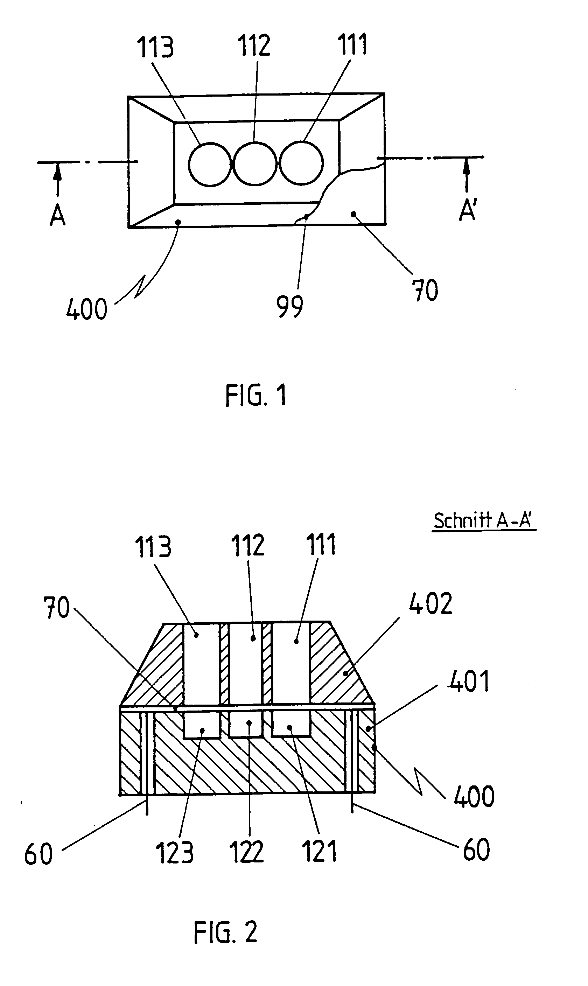

FIG. 1 zeigt die bevorzugte Ausführungsform des erfindungsgemäßen Monopuls-Kleinradars in der Draufsicht.

Zu erkennen sind die Öffnungen dreier Hohlleiter 111, 112 und 113 in einem Gehäuse 400. Die Öffnungen der drei Hohlleiter 111, 112 und 113 liegen nebeneinander. An einer Aufbruchstelle 99 des Gehäuses 400 ist in diesem das Substrat 70 zu erkennen.

FIG. 2 zeigt die bevorzugte Ausführungsform des erfindungsgemäßen Monopuls-Kleinradars im Querschnitt.

Wie anhand dieser Darstellung deutlich wird, sind die drei Hohlleiter 111, 112 und 113 auf dem Substrat 70 ausgebildet. Die Wandungen eines jeden Hohlleiters 111, 112 und 113 beranden dabei jeweils eine Hochfrequenzbaugruppe des Hochfrequenzteiles. Dadurch, daß die Hohlleiter 111, 112 und 113 aus dem Vollmaterial des Gehäuseoberteils 402 des Gehäuses 400 herausgearbeitet sind, wird das Gehäuseoberteil 402 bei der Montage auf das Substrat 70, welches zu diesem Zeitpunkt im Gehäuseunterteil 401 des Gehäuses 400 fixiert ist, derart auf das Substrat 70 aufgelegt, daß keine elektrischen Gleichspannungskurzschlüsse durch das Gehäusoberteil 402 auf dem Substrat 70 entstehen und dennoch eine optimale Ankopplung der Hochfrequenzbaugruppen an den jeweiligen Hohlleiter 111, 112 und 113 erfolgt.

Weiterhin ist zu erkennen, daß die Hohlleiterhauptachsen der Hohlleiter 111, 112 und 113 parallel zueinander verlaufen und nach FIG. 1 in einer Ebene liegen.

Auf der den Hohlleitern 111, 112, 113 gegenüberliegenden Rückseite des Substrats 70 ist jeweils ein Hohlleiterkurzschluß 121, 122, 123 angebracht. Die Hauptachse der Hohlleiter 111, 112, 113 und der zugehörigen Hohlleiterkurzschlüsse 121, 122, 123 fallen zusammen. Die einzelnen Hohlleiterkurzschlüsse 121, 122, 123 sind jeweils durch Sacklochbohrungen realisiert. Ferner ist zu erkennen, daß von den Hochfrequenzbaugruppen über die Substratrückseite Signal- und Versorgungsspannungsleitungen 60 herausgeführt sind.

Bei der Erstellung der planaren Schaltung auf dem Substrat 70 werden die Impedanzen der Hochfrequenzbaugruppen, nämlich die des Oszillators 30 und der Mischer 21, 22 so ausgelegt, daß eine breitbandige optimale Feldanpassung zum Hohlleiter 111, 112 und 113 erfolgen kann. Dazu dienen auch die Hohlleiterabschlüsse 121, 122, 123 beispielsweise in Form von elektrischen Kurzschlüssen im unteren Gehäuseunterteil 401. Nach dem Einbetten der planaren Schaltung zwischen die beiden Gehäuseteile 401 und 402 ist somit keine mikrowellentechnische Verbindung zur Signalzufuhr und Aussendung mehr notwendig.

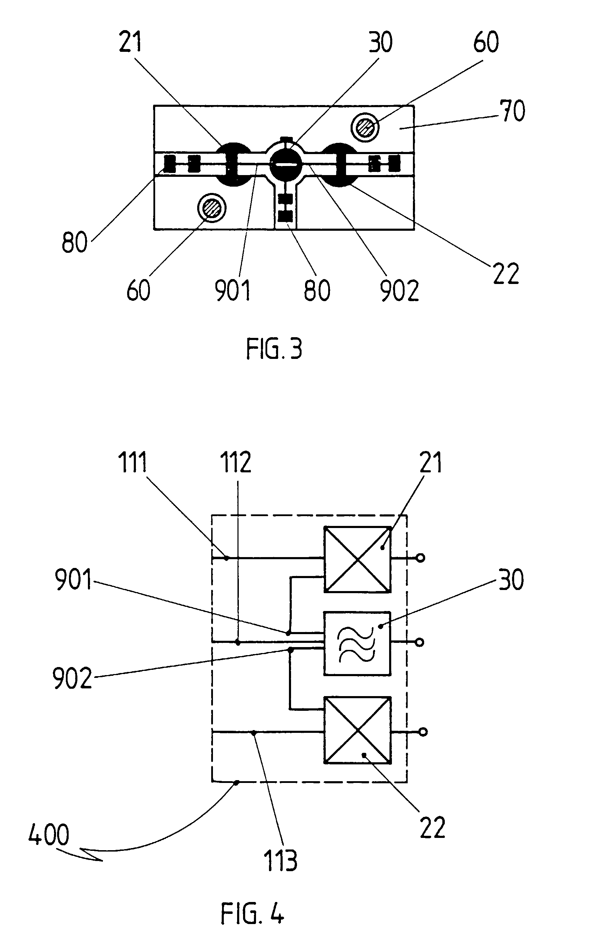

FIG. 3 zeigt das Substrat der bevorzugten Ausführungsform des erfindungsgemäßen Monopuls-Kleinradars mit einer Planarschaltung in Draufsicht.

Zu erkennen ist das Substrat 70, Löcher im Substrat 70, in die nach der Bestückung des Substrats die Signal- und Versorgungsleitungen 60 durchgeführt sind, sowie die Metallisierung (schwarze Flächen) der Mikroleitungsstruktur. Die Mikrostreifenleitungsstruktur weist eine T-Form auf, in deren Schenkelschnittpunkt ein Oszillator 30 zu erkennen ist. Über zwei Koppler 901 und 902 ist der Oszillator 30 an Mischer 21 und 22 angekoppelt, die am Ende einer gemeinsamen gedachten Linie Tiefpaßfilter 80 bzw. Lötflächen aufweisen. Senkrecht zu dieser gedachten Linie ist ein Tiefpaßfilter 80 bzw. Lötflächen mit dem Oszillator 30 verbunden. Am Ende der jeweiligen Tiefpaßfilter 80 bzw. Lötflächen sind weitere Baugruppe (nicht gezeigt) angeschlossen bzw. Signal- und Versorgungsleitungen 60 vom Substrat 70 weggeführt. Wichtig ist, daß der Oszillator 30 und die beiden Mischer 21, 22 so plaziert werden, daß nach der Montage des Gehäuses 400 die Hohlleiter 111, 112 und 123 nach FIG. 1 und 2 wie Fenster darüber zu liegen kommen (Fenstertechnik).

FIG. 4 zeigt ein Prinzipschaltbild der Planarschaltung gemäß FIG. 3.

Dargestellt sind der Oszillator 30, der über zwei Koppler 901 und 902 an die Mischer 21 und 22 angekoppelt ist. Ferner sind die drei Hohlleiter 111, 112 und 113, welche an den Oszillator 30 und die Mischer 21 und 22 angekoppelt sind, schematisch in der Figur dargestellt.

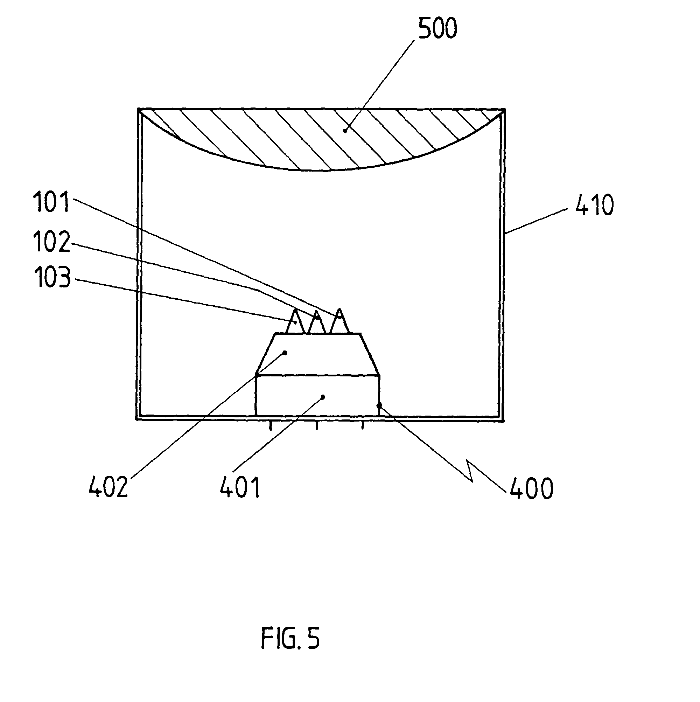

FIG. 5 zeigt eine erste Weiterbildung des Monopuls-Kleinradars gemäß FIG. 2 in Seitenansicht.

Zu erkennen sind dielektrische Strahler 101, 102 und 103, die jeweils am Ausgang der hier nicht gezeigten Hohlleiter 111, 112 und 113 fixiert sind. Die Hohlleiter 111, 112 und 113 sind dabei, wie in FIG. 2 gezeigt, im Gehäuse 400 ausgebildet. Das Gehäuse 400 ist von einem weiteren Gehäuse 410 umgeben, welches eine plankonvexe Linse 500 im Strahlungsfeld der dielektrischen Strahler 101, 102 und 103 enthält. Durch Anordnung des Gehäuses 400 im Brennpunkt einer Linse 500 ergeben sich im Fernfeld drei Antennenkeulen, welche sich versetzt überlappen. Im Radarfall multipliziert sich das Sendediagramm mit der jeweiligen Empfangskeule zu einer insgesamt schmäleren Produktkeule. Dabei kann der Versatzwinkel so gewählt werden, daß das erste Nebenkeulenmaximum der Sendekeule sich mit der erste Nullstelle der Empfangskeule überdeckt; das Produkt ist dann theoretisch Null. Eine Formung und Verbesserung der Anpassung des Primärdiagramms wird durch die dielektrischen Strahler 101, 102 und 103 bewirkt.

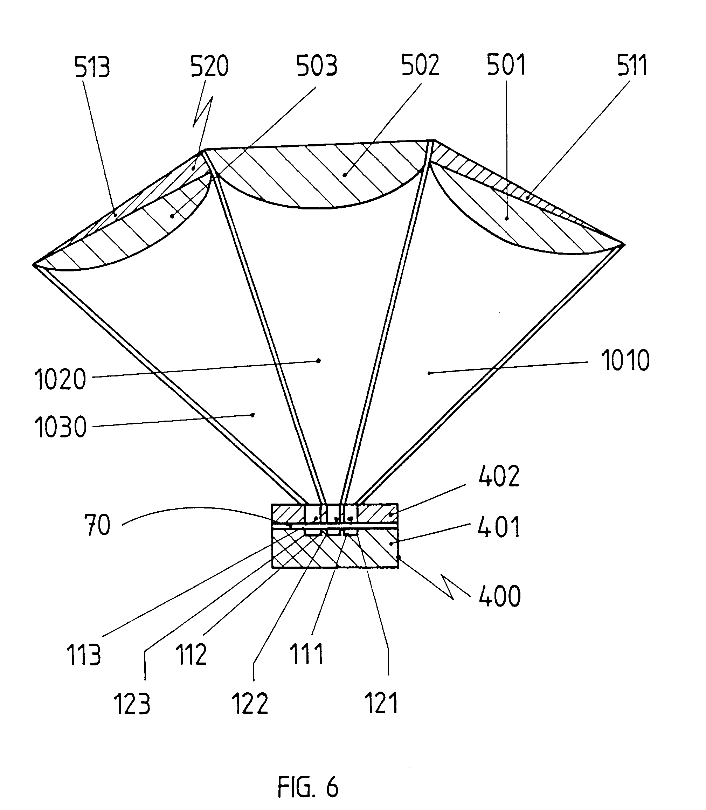

FIG. 6 zeigt eine zweite Weiterbildung des Monopuls-Kleinradars gemäß FIG. 2 im Querschnitt.

Zu erkennen sind hier die beiden Gehäusehälften 401, 402, die Hohlleiter 111, 112, 113, die Hohlleiterabschlüsse 121, 122 und 123 und das Substrat 70 nach FIG. 2 sowie Trichterantennen 1010, 1020, 1030, die am offenen Ende der Hohlleiter 111, 112 und 123 montiert sind. Plankonvexe Linsen 501, 502, 503 sind im Strahlungsfeld der Trichterantenne 1010, 1020, 1030 an der Stelle ihrer in etwa maximalen lichten Weite fixiert. Da die offenen Enden der Trichterantennen 1010, 1020, 1030 in etwa auf einem gedachten Kreisbogen liegen, sind zwei optische Korrekturkeile 511, 513 auf der ersten und dritten plankonvexen Linse 501 und 503 realisiert, so daß sich insgesamt eine in etwa ebene oder leicht gewölbte Linsenoberfläche 520 ergibt. Dies ist besonders vorteilhaft, da bei Verschmutzung der Linsenoberfläche 520, insbesondere im Kfz-Betrieb, es zu unerwünschten Reflexionen der Sendeenergie in die Empfangskanäle kommen kann. Dies wird mittels der drei Trichterantennen 1010, 1020, 1030 weitgehend verhindert. Wird nämlich z. B. durch Wassertropfen oder Vereisung der mittigen Sendelinse Sendeleistung reflektiert, so läuft diese in den Sender zurück und nicht in einen der beiden Empfänger. Dies ist wesentlich bei FM-CW Systemen im Kfz-Bereich, da das Übersprechen von Sendeenergie im Nahbereich den Empfängervorverstärker zustopfen kann. Der Keulenversatz kann durch die Korrekturkeile 511, 513 im Strahlergang der Linsen festgelegt werden.

Die Erfindung ist nicht auf obige Ausführungsbeispiele beschränkt. So könnten beispielsweise die Hohlleiter 111, 112, 113 stark verkürzt werden und direkt in Trichterantennen 1010, 1020, 1030 übergehen. Ferner sind als Hohlleiter z. B. Rechteckhohlleiter und Hohlleiter mit ellipsenförmigem Querschnitt verwendbar.

## Patentansprüche

1. Monopuls-Kleinradar, bestehend aus einer in einem Gehäuse befindlichen Hochfrequenzbaugruppe, die sich aus zwei Mischern und einem Oszillator zusammensetzt, wobei die Mischer und der Oszillator untereinander sowie mit jeweils einer Antenne verbunden sind, dadurch gekennzeichnet,
- daß die Hochfrequenzbaugruppe auf einem Substrat (70) ausgebildet ist;
- daß auf die Mischer (21, 22) und den Oszillator (30) jeweils ein Hohlleiter (111, 112, 113) aufgesetzt ist.

2. Monopuls-Kleinradar nach Patentanspruch 1, dadurch gekennzeichnet, daß die Hohlleiterhauptachsen der Hohlleiter (111, 112, 113) parallel zueinander verlaufen.

3. Monopuls-Kleinradar nach Patentanspruch 2, dadurch gekennzeichnet, daß auf der den Hohlleitern (111, 112, 113) gegenüberliegenden Rückseite des Substrats (70) direkt unter den Mischern (21, 22) und/oder dem Oszillator (30) jeweils ein Hohlleiterkurzschluß (121, 122, 123) angebracht ist und daß die Hauptachse der Hohlleiter (111, 112, 113) und der zugehörigen Hohlleiterkurzschlüsse (121, 122, 123) vorzugsweise zusammenfallen.

4. Monopuls-Kleinradar nach Patentanspruch 3, dadurch gekennzeichnet, daß die einzelnen Hohlleiterkurzschlüsse (121, 122, 123) jeweils durch Sacklochbohrungen realisiert sind.

5. Monopuls-Kleinradar nach einem der vorherigen Patentansprüche, dadurch gekennzeichnet, daß von den Hochfrequenzbaugruppen über die Substratrückseite Signal- und Versorgungsspannungsleitungen herausgeführt sind.

6. Monopuls-Kleinradar nach einem der vorhergehenden Ansprüche, dadurch gekennzeichnet, daß am Ausgang der einzelnen Hohlleiter (111, 112, 113) jeweils ein dielektrische Strahler (101, 102, 103) fixiert ist.

7. Monopuls-Kleinradar nach Patentanspruch 6, dadurch gekennzeichnet, daß mindestens eine plankonvexe Linse (500) im Strahlungsfeld der dielektrischen Strahler (101, 102, 103) angeordnet ist.

8. Monopuls-Kleinradar nach einem der vorhergehenden Ansprüche, dadurch gekennzeichnet, daß am Ausgang der einzelnen Hohlleiter (111, 112, 113) jeweils eine Trichterantenne (1010, 1020, 1030) montiert ist.

9. Monopuls-Kleinradar nach Patentanspruch 8, dadurch gekennzeichnet, daß die plankonvexen Linsen (501, 502, 503) im Strahlungsfeld der einzelnen Trichterantennen (1010, 1020, 1030) an der Stelle ihrer in etwa maximalen lichten Weite fixiert sind.

10. Monopuls-Kleinradar nach Patentanspruch 9, dadurch gekennzeichnet, daß mindestens ein optischer Korrekturkeil (511, 513) auf mindestens einer der plankonvexen Linsen (501, 502, 503) realisiert ist.

11. Monopuls-Kleinradar nach einem der vorhergehenden Ansprüche, dadurch gekennzeichnet, daß die Hohlleiter (111, 112, 113) Rundhohlleiter oder Hohlleiter mit ellipsenförmigem Querschnitt sind.

## Claims

1. Small monopulse radar, consisting of a high-frequency subassembly, which is disposed in a housing and which is composed of two mixers and an oscillator, wherein the mixers and the oscillator are interconnected as well as each connected with a respective antenna, characterised in that
- the high-frequency subassembly is constructed on a substrate (70); and
- a respective waveguide (111, 112, 113) is placed on each of the mixers (21, 22) and the oscillator (30).

2. Small monopulse radar according to patent claim 1, characterised in that the waveguide main axes of the waveguides (111, 112, 113) extend parallel to one another.

3. Small monopulse radar according to patent claim 2, characterised in that a respective waveguide short-circuit (121, 122, 123) is mounted on the rear side, which is opposite the waveguides (111, 112, 113), of the substrate (70) directly under the mixers (21, 22) and/or the oscillator (30) and that the main axes of the waveguides (111, 112, 113) and the associated waveguide short-circuits (121, 122, 123 preferably coincide.

4. Small monopulse radar according to patent claim 3, characterised in that the individual waveguide short-circuits (121, 122, 123) are realised by respective blind bores.

5. Small monopulse radar according to one of the preceding patent claims, characterised in that signal and supply voltage lines are led out from the high-frequency subassembly over the substrate rear side.

6. Small monopulse radar according to one of the preceding claims, characterised in that a respective dielectric radiator (101, 102, 103) is fixed at the output of each of the individual waveguides (111, 112, 113).

7. Small monopulse radar according to patent claim 6, characterised in that at least one plano-convex lens (500) is arranged in the radiation field of the dielectric radiators (101, 102, 103).

8. Small monopulse radar according to according to one of the preceding claims, characterised in that a respective horn antenna (1010, 1020, 1030) is mounted at the output of each of the individual waveguides (111, 112, 113).

9. Small monopulse radar according to patent claim 8, characterised in that the plano-convex lenses (501, 502, 503) are fixed in the radiation field of the individual horn antennae (1010, 1020, 1030) at about the position of their maximum clear width.

10. Small monopulse radar according to patent claim 9, characterised in that at least one optical correction wedge (511, 513) is realised on at least one of the plano-convex lenses (501, 502, 503).

11. Small monopulse radar according to according to one of the preceding claims, characterised in that the waveguides (111, 112, 113) are circular waveguides or waveguides with elliptical cross-section.

## Revendications

1. Radar monopulse de petites dimensions, comprenant une unité à haute fréquence disposée dans un boîtier, laquelle se compose de deux mélangeurs et d'un oscillateur, les mélangeurs et l'oscillateur étant reliés les uns aux autres, ainsi qu'à une antenne respective, caractérisé en ce que :
- l'unité à haute fréquence est réalisée sur un substrat (70);
- sur les mélangeurs (21, 22) et sur l'oscillateur (30) sont posés des guides d'ondes respectifs (111, 112, 113).

2. Radar monopulse de petites dimensions selon la revendication 1, caractérisé en ce que les axes principaux des guides d'ondes (111, 112, 113) sont parallèles les uns aux autres.

3. Radar monopulse de petites dimensions selon la revendication 2, caractérisé en ce que sur la face postérieure du substrat (70) opposée aux guides d'ondes (111, 112, 113) sont disposés des shunts de guides d'ondes respectifs (121, 122, 123) directement au-dessous des mélangeurs (21, 22) et/ou de l'oscillateur (30), et en ce que les axes principaux des guides d'ondes (111, 112, 113) et des shunts de guides d'ondes associés (121, 122 123) sont de préférence en coïncidence.

4. Radar monopulse de petites dimensions selon la revendication 3, caractérisé en ce que les shunts de guides d'ondes individuels (121, 122, 123) sont réalisés par des perçages borgnes respectifs.

5. Radar monopulse de petites dimensions selon l'une des revendications précédentes, caractérisé en ce que depuis les unités à haute fréquence et par l'intermédiaire de la face postérieure du substrat sont sorties des lignes pour les signaux et pour la tension d'alimentation.

6. Radar monopulse de petites dimensions selon l'une des revendications précédentes, caractérisé en ce qu'un émetteur diélectrique (101, 102, 103) respectif est fixé à la sortie des guides d'ondes individuels (111, 112, 113).

7. Radar monopulse de petites dimensions, selon la revendication 6, caractérisé en ce qu'au moins une lentille plan-convexe (500) est agencée dans le champ de rayonnement des émetteurs diélectriques (101, 102, 103).

8. Radar monopulse de petites dimensions selon l'une des revendications précédentes, caractérisé en ce qu'à la sortie des guides d'ondes individuels (111, 112, 113) est montée une antenne en entonnoir (1010, 1020, 1030) respective.

9. Radar monopulse de petites dimensions selon la revendication 8, caractérisé en ce que les lentilles plan-convexes (501, 502, 503) sont fixées dans le champ de rayonnement des antennes en entonnoir individuelles (1010, 1020, 1030) à l'emplacement approximatif de leur largeur libre maximum.

10. Radar monopulse de petites dimensions selon la revendication 9, caractérisé en ce que qu'au moins un coin optique de correction (511, 513) est réalisé sur l'une au moins des lentilles plan-convexes (501, 502, 503).

11. Radar monopulse de petites dimensions selon l'une des revendications précédentes, caractérisé en ce que les guides d'ondes (111, 112, 113) sont des guides d'ondes circulaires ou bien des guides d'ondes à section elliptique.
